# NEUE EUROPÄISCHE PATENTSCHRIFT

(11) **EP 2 298 845 B2**
(45) Veröffentlichungstag und Bekanntmachung des Hinweises auf die Entscheidung über den Einspruch: **11.08.2021**
(45) Hinweis auf die Patenterteilung: 20.06.2012
(21) Anmeldenummer: 10175165.9
(22) Anmeldetag: 03.09.2010
(51) Int. Cl.: C09J 7/21

(54) **Abriebfestes Gewebeklebeband**
Wear-resistant fabric adhesive tape
Ruban adhésif de tissu résistant à l'usure

(30) Priorität: 18.09.2009 DE 102009041898
(43) Veröffentlichungstag der Anmeldung: 23.03.2011
(73) Patentinhaber: tesa SE, 22848 Norderstedt (DE)
(72) Erfinder: Kopf, Patrik Dr., 22417, Hamburg (DE); Wahlers-Schmidlin, Andreas, 21720, Guderhandviertel (DE)
(74) Vertreter: tesa SE

(56) Entgegenhaltungen:
- EP-A1- 1 074 595
- EP-A1- 1 911 633
- EP-B1- 1 990 393
- DE-U1-202006 015 701
- DE-U1-202006 016 438
- DE-U1-202007 006 816
- DE-U1-202007 008 003
- "tex", INTERNET CITATION, Mai 2005 (2005-05), Seite 1, XP002483515, Gefunden im Internet: URL:http://www.roempp.com/prod/index1.html [gefunden am 2008-09-06]
- DIN 53 830, Teil 3, May 1981 (1981-05),
- Englische Ã bersetzung von JP A S6397678
- Entscheidung der Einspruchsabteilung zu dem Patent EP 1 990 393 B1, Anmelde-Nr 08 152 261.7

## Beschreibung

Die Erfindung betrifft ein hoch abriebfestes Band, vorzugsweise zum Umhüllen von langgestrecktem Gut wie insbesondere Leitungen oder Kabelsätze, aus einem Träger, auf den vorzugsweise zumindest auf einer Seite eine druckempfindliche Klebebeschichtung aufgebracht ist. Des Weiteren betrifft die Erfindung die Verwendung des Bands sowie einen Kabelbaum, der mit dem erfindungsgemäßen Band ummantelt ist.

In vielen Industriebereichen werden Bündel aus einer Vielzahl von elektrischen Leitungen vor dem Einbau oder in bereits montiertem Zustand umwickelt, um den Raumbedarf des Leitungsbündels durch Bandagieren zu reduzieren sowie zusätzlich Schutzfunktionen zu erzielen. Mit Folienklebebändern wird ein gewisser Schutz vor Flüssigkeitszutritt erreicht, mit luftigen und voluminösen Klebebändern auf Basis von dicken Vliesstoffen oder Schaumstoffen als Träger erhält man dämpfende Eigenschaften, bei Verwendung von abriebfesten, stabilen Trägermaterialien wird eine Schutzfunktion gegen Scheuern und Reiben erzielt.

Die Abriebbeständigkeit ist ein Maß für die Scheuerfestigkeit von Klebebändern. Als Methode, die Abriebbeständigkeit von Schutzsystemen in der Fahrzeugelektrik zu bestimmen, hat sich die internationale Norm ISO 6722, Kapitel 9.3 "Scrape abrasion test" (Ausgabe April 2002), etabliert. In Anlehnung an die Norm ISO 6722 wird die Abriebbeständigkeit von Klebebändern gemäß LV 312 geprüft. Der Prüfling mit einer Länge von ca. 10 cm wird auf einen 5 oder 10 mm dicken Stahldorn einlagig in Längsrichtung aufgeklebt. Als Abriebwerkzeug dient ein Stahldraht mit 0,45 mm Durchmesser, der unter einer Gewichtsbelastung von 7 N mittig über den Prüfling reibt.

Als Maßzahl für die Abriebeigenschaften wird die Anzahl der Doppelhübe bestimmt, bis der Prüfling zerstört ist. Bei einem Gewebe ist die Bewegungsrichtung des Stahldrahtes parallel zu den Kettfäden ausgerichtet.

Das Ergebnis der Prüfung wird die Abriebklasse des Prüflings unter Nennung Domdurchmessers und der Gewichtsbelastung genannt. Eine Klassifizierung der Klebebänder erfolgt in den Klassen A bis F gemäß Tabelle 1.

Bei Domdurchmesser von 5 mm ist der Prüfling meist mit weniger Hüben zerstört als bei Verwendung eines Dorndurchmessers von 10 mm. Deshalb kann ein Klebeband beispielsweise die Abriebklasse D bei 10 mm und die Abriebklasse C bei 5 mm erreichen.

**Tabelle 1 : Einteilung der Abriebklassen nach LV312 (Februar 2008)**

| **Abriebklasse** | **Anforderung** |
|---|---|
| A kein Abriebschutz | < 100 Hübe |
| B geringer Abriebschutz | 100 - 499 Hübe |
| C mittlerer Abriebschutz | 500 - 999 Hübe |
| D hoher Abriebschutz | 1000 - 4999 Hübe |
| E sehr hoher Abriebschutz | 5000 - 14999 Hübe |
| F extrem hoher Abriebschutz | ≥ 15000 Hübe |

Hochabriebfeste Klebebänder sind also Klebebänder mit Abriebklasse D.

Heute werden für einen hohen Abriebschutz meist einlagige Gewebeklebebänder bestehend aus einem Gewebeträger (zum Beispiel Polyestergewebe) und einer Klebmasseschicht, eingesetzt.

Die Trägergewebe sind charakterisiert durch das Fadenmaterial (beispielsweise Polyestergarn), das Fadengewicht der Fäden (Gewicht pro Länge, Einheit dtex, 1 dtex = 1 g / 10000 m Faden) und der Fadendichte oder Fadenzahl (Anzahl der Fäden pro cm). Gewebe bestehen aus Kettfäden (Längsrichtung, Maschinenrichtung, entspricht auch der Längsrichtung des daraus hergestellten Klebebandes) und Schussfäden (Querfäden). Die Fäden sind üblicherweise in Leinwandbindung verwebt. Andere Bindungsarten sind Atlasbindung und Köperbindung. Gewebe in Köperbindung (zum Beispiel ein "2 über 1 Köper") erzeugen einen so genannten Köpergrat, der diagonal zur Maschinenrichtung verläuft. Gewebe mit Köperbindung sind in der Regel etwas weicher als gleiche Gewebe in Leinwandbindung. Insbesondere in Diagonalrichtung ist die Biegesteifigkeit geringer. Das kann für daraus hergestellte Klebebänder ein Vorteil sein.

Die Fäden können aus gesponnenen Garnen oder Filamentgarnen (Endlosgarnen) bestehen. Üblicherweise wird Filamentgarn eingesetzt. Dieses besteht aus einer festgelegten Anzahl von Einzelfilamenten und kann texturiert oder glatt und punktverfestigt oder unverfestigt vorliegen. Die Gewebe können nachträglich gefärbt sein oder aus spinngefärbten Garnen bestehen.

Als Quertiter eines Gewebes bezeichnet man die Anzahl der Querfäden (Schussfäden) pro Zentimeter multipliziert mit dem Fadengewicht der Querfäden in dtex. Die Einheit ist dtex/cm.

Als Längstiter bezeichnet man die Anzahl der Längsfäden (Kettfäden) pro Zentimeter multipliziert mit dem Fadengewicht der Längsfäden in dtex. Die Einheit ist ebenfalls dtex/cm.

Aus den verwendeten Garnen, deren Anzahl und der Art der Bindung ergibt sich schließlich das Flächengewicht des Gewebes.

Polyestergewebe, die als Träger für Kabelwickelbänder benutzt werden, haben typischerweise Flächengewichte zwischen 60 und 140 g/m². Die Abriebfestigkeit eines Klebebandes steigt mit dem Flächengewicht des verwendeten Polyestergewebes.

Polyestergewebeklebebänder für die Kabelwicklung mit Abriebschutz sind bekannt. Unter den Handelsnamen "tesa® 51026" oder "Coroplast 837X" sind sie als Kabelwickelbänder im Einsatz. Sie bestehen aus einem Polyestergewebe mit dem Flächengewicht 125 bis 135 g/m² und einer Klebmasseschicht von 80 bis 100 g/m². Kett- und Schussfäden haben das gleiche Garngewicht von etwa 167 dtex. Durch die zahlreichen Kettfäden mit hohen Garngewichten sind die Klebebänder hochabriebfest, erfüllen also eine Abriebklasse D nach LV312 bei 10 mm Domdurchmesser.

Der Nachteil dieser bekannten Klebebänder liegt darin, dass sie wegen der sehr vielen und dicken Kettfäden des verwendeten Gewebes in Längsrichtung, also Verarbeitungsrichtung, sehr steif sind. Eine Steifigkeit in Längsrichtung hat bei der Anwendung des Klebebandes als Kabelwickelband den Nachteil, dass die Klebebandenden dazu neigen, nach einiger Zeit abzustehen. Dieses Verhalten bezeichnet man als Abflaggen oder Flagging.

Es wird begünstigt durch eine hohe Steifigkeit des Klebebandes in Längsrichtung und durch kleine Durchmesser des ummantelten Guts.

Vermindert wird die Flaggingneigung durch eine hohe Klebkraft des Klebebandes auf der eigenen Rückseite nach der Applikation. Eine hohe Klebkraft setzt unter anderem einen hohen Klebmasseauftrag des Klebebandes voraus.

Bei Verwendung einer weicheren Bindung des Gewebes, wie zum Beispiel Köperbindung, kann wegen der verringerten Biegesteifigkeit die Flaggingneigung verringert werden.

In DE 20 2007 008 003 U wird eine Weiterentwicklung dieser bekannten Klebebänder beschrieben. Um das Ziel eines flaggingfreien Produkts zu erreichen, werden die Fadendichten in Längs- und Querrichtung gesenkt. Dadurch soll die Biegesteifigkeit des Klebebandes verringert und das Flagging verhindert werden.

Bei Kombination von Tabelle 2 und Tabelle 3 in obiger Veröffentlichung zeigt sich aber das Dilemma dieser Maßnahme: Je mehr die Fadenzahl gesenkt wird, umso weicher wird zwar das Gewebe (kleinerer Wert der Biegesteifigkeit), aber gleichzeitig sinkt die Abriebfestigkeit des daraus hergestellten Klebebandes stark ab. Schon bei einer Senkung der Biegesteifigkeit auf 3 bis 4 mN*cm² kann die Abriebklasse D bei einem 10 mm-Dorn nicht mehr erreicht werden, das heißt, das Klebeband ist nicht mehr hochabriebfest. Diese Biegesteifigkeitswerte sind aber notwendig, um auch über lange Anwendungszeiten flaggingfreie Klebebänder zu erhalten.

Aus EP 1 074 595 B1 (beziehungsweise der Prioritätsgebenden FR 99 10029 A) ist ein Polyestergewebeklebeband bekannt, das handeinreißbar ist. Auf eine Abriebfestigkeit oder Abriebklasse des Klebebandes wird nicht eingegangen.

Der Längstiter wird mit maximal 2500 dtex/cm angegeben, der Quertiter mit maximal 4500 dtex/cm. Daraus ergäbe sich ein Flächengewicht des Gewebes von maximal circa 70 g/m². Die Abriebklasse D bei 10 mm kann mit einem so geringen Flächengewicht nicht erreicht werden.

Auch DE 20 2007 006 816 U beschreibt ein handeinreißbares Gewebeklebeband, bestehend aus Polyestergewebe und Klebmasseschicht. Im Beispiel wird ein Gewebe genannt mit einem Längstiter von 2613 dtex/cm und einem Quertiter von 5200 dtex/cm.

Die Abriebklasse wird bei 10 mm mit C angegeben. Dies ist plausibel, denn rechnerisch ergibt sich ein Flächengewicht des Gewebes von etwa 78 g/m², die Abriebklasse D ist damit nicht erreichbar.

Aufgabe der Erfindung ist es, gegenüber dem Stand der Technik eine merkliche Verbesserung zu erzielen und ein Band bereitzuslellen, welches die Möglichkeit zur Bandagierung von Einzelleitungen zu Kabelsätzen mit hohem Schutz gegen mechanische Schädigungen durch Scheuern und Reiben an scharfen Kanten, Graten, oder Schweißpunkten aufweist und dabei kein Flagging aufweist.

Gelöst wird diese Aufgabe durch ein Band, wie es im Hauptanspruch näher gekennzeichnet ist. In den Unteransprüchen sind vorteilhafte Ausführungsformen der Erfindung beschrieben. Des Weiteren sind die Verwendung des erfindungsgemäßen Bands sowie ein mit dem Band ummantelter Kabelbaum vom Erfindungsgedanken umfasst.

Erfindungswesentlich ist, dass der Quotient aus auf die Länge bezogenem Titer der Querfäden, also die Anzahl der Querfäden (Schussfäden) pro Zentimeter multipliziert mit dem Fadengewicht der Querfäden in dtex, und auf die Breite bezogenem Titer der Längsfäden, also die Anzahl der Längsfäden (Kettfäden) pro Zentimeter multipliziert mit dem Fadengewicht der Längsfäden in dtex, zwischen 2,2 und 6, vorzugsweise 2,8 und 4, beträgt und der Träger ein Flächengewicht von größer oder gleich 110 g/m² aufweist.

Überraschenderwelse zeigt sich, dass es möglich ist, bei Verwendung von Gewebeträgern, bei denen der Quertiter sehr viel größer ist als der Längstiter, die Anforderungen an Flaggingfreiheit bei gleichzeitig hoher Abriebfestigkeit zu erfüllen. Als Abriebfestigkeit wird dabei die Abriebklasse D erreicht, gemessen auf einem 10 mm-Dorn nach der Norm LV312.

Insbesondere bei den erfindungsgemäß vorgesehenen dünnen Fäden in Längsrichtung, von denen ausgegangen werden musste, dass diese eine geringe mechanische Stabilität aufweisen, ist es äußerst überraschend, dass dennoch die sehr hohe Abriebfestigkeit in Längsrichtung erzielt werden kann.

Die Abriebfestigkeit wird unerwartet durch Querfäden mit hohem Garngewicht und/oder hoher Fadenzahl sichergestellt. Als Folge davon wird eine geringe Biegesteifigkeit des Gewebes und damit auch des Klebebandes in Längsrichtung erhalten.

Die Biegesteifigkeit des Gewebes in Längsrichtung liegt bevorzugt unter 3 mN*cm², gemessen nach DIN 53362.

Als Folge davon ist die Flaggingneigung des Klebebandes sehr gering. Beispielsweise ergibt sich bei der Flaggingprüfung nach der Methode der LV312 ein Wert von null Millimeter. Wegen der geringeren Anforderungen an die Haltekraft des Bandes auf seiner Rückseite kann deshalb erfindungsgemäß auch der Klebmasseauftrag gering ausfallen. Dies wirkt sich positiv auf die Gesamtdicke des Klebebandes und auf die Lauflänge auf einer Rolle bei gegebenem Außendurchmesser aus.

Eine weitere Folge des gering einstellbaren Längstiters ist die Möglichkeit, die Längsfäden so auszulegen, dass ein hervorragend schneidbares Klebeband entsteht. Die Höchstzugkraft des Klebebandes in Längsrichtung beträgt bevorzugt weniger als 115 N/cm. Das Garngewicht der Längsfäden (Kettfäden) beträgt bevorzugt höchstens 90 dtex. Daraus folgt, dass das Klebeband mit einem Hilfsmittel wie einer Schere sehr gut quer durchzuschneiden ist. Dies bietet Vorteile insbesondere bei der maschinellen Verarbeitung, da unter anderem die dort eingesetzten Messer weniger schnell stumpf werden.

Eine hohe Abriebfestigkeit ist mit einer guten Schneidbarkeit kombiniert.

Weiter bevorzugt weisen die Kettfäden ein Garngewicht von mehr als 30 dtex, besonders bevorzugt 33 bis 65 dtex, ganz besonders bevorzugt 50 bis 60 dtex auf.

Weiter bevorzugt weisen die Schussfäden ein Garngewicht zwischen 220 und 470 dtex, bevorzugt zwischen 300 und 370 dtex auf.

Gemäß einer weiteren vorteilhaften Ausführungsform der Erfindung beträgt die Fadenzahl in der Kette 30 bis 60/cm, vorzugsweise 45 bis 60/cm, besonders vorzugsweise 48 bis 55/cm und/oder die Fadenzahl im Schuss 20 bis 40/cm, vorzugsweise 25 bis 30/cm.

Die Fäden können aus gesponnenen Garnen oder Filamentgarnen (Endlosgarnen) bestehen. Üblicherweise wird Filamentgarn eingesetzt. Dieses besteht aus einer festgelegten Anzahl von Einzelfilamenten und kann texturiert oder glatt und punktverfestigt oder unverfestigt vorliegen.

Weiter bevorzugt beträgt die Dicke des Gewebes maximal 200 µm, besonders bevorzugt 130 bis 190 µm, ganz besonders bevorzugt 180 bis 190 µm.

Der Träger weist gemäß einer weiteren vorteilhaften Ausführungsform der Erfindung ein Flächengewicht von bis zu 200 g/m² auf, bevorzugt 114 bis 140 g/m², besonders bevorzugt 118 g/m².

Der Klebmasseauftrag, bezogen auf die Klebebandfläche, beträgt bevorzugt weniger als 90 g/m², besonders bevorzugt mehr als 30 g/m². Ganz besonders bevorzugt liegt er zwischen 40 und 60 g/m².

Dadurch ist die Gesamtdicke des Klebebands, verglichen mit dem Stand der Technik, geringer. Das heißt, bei hoher Abriebfestigkeit liegt ein Produkt mit verminderter Dicke vor. Dies hat den Vorteil, dass die Bandage um das langgestreckte Gut, wie zum Beispiel Kabelbündel, nicht so stark aufträgt. Dies wiederum ermöglicht dickere Kabelsätze oder engere Verbauräume, ohne dass der Abriebschutz leidet.

Um aus dem Träger ein Klebeband herzustellen, kann auf alle bekannten Klebemassensysteme zurückgegriffen werden. Neben Natur- oder Synthesekautschuk basierten Klebemassen sind insbesondere Silikonklebemassen sowie Polyacrylatklebemassen verwendbar.

Vorzugsweise ist die Klebemasse eine Haftklebemasse, also eine viskoelastische Masse, die bei Raumtemperatur in trockenem Zustand permanent klebrig und klebfähig bleibt. Die Klebung erfolgt durch leichten Anpressdruck sofort auf fast allen Substraten.

Eine Klebemasse, die sich als besonders geeignet zeigt, ist eine niedermolekulare Acrylatschmelzhaftklebemasse, wie sie unter der Bezeichnung acResin UV von der BASF geführt wird. Diese Klebemasse mit niedrigem K-Wert erhält ihre anwendungsgerechten Eigenschaften durch eine abschließende strahlenchemisch ausgelöste Vernetzung.

Ebenfalls bevorzugt besteht die Klebebeschichtung aus einer Klebmasse auf Basis Synthesekautschuk, nämlich insbesondere eine Klebemasse aus mindestens einem Vinylaromaten-Block-Copolymer und zumindest einem Klebharz. Typische Einsatzkonzentrationen für das Blockcopolymer liegen in einer Konzentration im Bereich zwischen 30 Gew.-% und 70 Gew.-%, insbesondere im Bereich zwischen 35 Gew.-% und 55 Gew.-%.

Als weitere Polymere können solche auf Basis reiner Kohlenwasserstoffe wie zum Beispiel ungesättigte Polydiene wie natürliches oder synthetisch erzeugtes Polyisopren oder Polybutadien, chemisch im Wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk sowie chemisch funktionalisierte Kohlenwasserstoffe wie zum Beispiel halogenhaltige, acrylathaltige oder vinyletherhaltige Polyolefine vorhanden sein, welche die vinylaromatenhaltigen Blockcopolymere bis zur Hälfte ersetzen können.

Als Klebrigmacher dienen Klebharze, die mit dem Elastomerblock der Styrolblockcopolymere verträglich sind.

Als weitere Additive können typischerweise Lichtschutzmittel wie zum Beispiel UV-Absorber, sterisch gehinderte Amine, Antiozonantien, Metalldesaktivatoren, Verarbeitungshilfsmittel, endblockverstärkende Harze eingesetzt werden.

Plastifizierungsmittel wie zum Beispiel Flüssigharze, Weichmacheröle oder niedermolekulare flüssige Polymere wie zum Beispiel niedermolekulare Polyisobutylene mit Molmassen < 1500 g/mol (Zahlenmittel) oder flüssige EPDM-Typen werden typischerweise eingesetzt.

Füllstoffe wie zum Beispiel Siliziumdioxid, Glas (gemahlen oder in Form von Kugeln), Aluminiumoxide, Zinkoxide, Calciumcarbonate, Titandioxide, Ruße, um nur einige zu nennen, ebenso Farbpigmente und Farbstoffe sowie optische Aufheller können ebenfalls Verwendung finden.

Üblicherweise werden Haftklebemassen primäre und sekundäre Antioxidantien zugesetzt, um ihre Alterungsstabilität zu verbessern. Primäre Antioxidantien reagieren dabei mit Oxi- und Peroxiradikalen, die sich in Gegenwart von Sauerstoff bilden können, und reagieren mit diesen zu weniger reaktiven Verbindungen. Sekundäre Antioxidantien reduzieren zum Beispiel Hydroperoxide zu Alkoholen. Bekanntermaßen besteht ein synergistischer Effekt zwischen primären und sekundären Alterungsschutzmitteln, so dass der Schutzeffekt einer Mischung häufig größer ist als die Summe der beiden Einzeleffekte.

Ist eine Schwerentflammbarkeit des beschriebenen Klebebands erwünscht, lässt sich diese erzielen, indem dem Träger und/oder der Klebemasse Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Die Herstellung und Verarbeitung der Haftklebemassen kann aus Lösang, Dispersion sowie aus der Schmelze erfolgen. Bevorzugte Herstell- und Verarbeitungsverfahren erfolgen aus der Schmelze. Für den letzteren Fall umfassen geeignete Herstellprozesse sowohl Batchverfahren als auch kontinuierliche Verfahren.

Die Klebemasse kann partiell, beispielsweise in Längsrichtung des Klebebands in Form eines Streifens aufgebracht sein, der eine geringere Breite aufweist als der Träger des Klebebands.

Je nach Verwendungsfall können auch mehrere parallele Streifen des Klebers auf dem Trägermaterial beschichtet sein.

Die Lage des Streifens auf dem Träger ist frei wählbar, wobei eine Anordnung direkt an einer der Kanten des Trägers bevorzugt wird.

Auf der Klebebeschichtung des Trägers kann zumindest ein Streifen einer Abdeckung vorgesehen sein, der oder die sich in Längsrichtung des Klebebands erstrecken und der oder die zwischen 20 % und 80 % der Klebebeschichtung abdecken.

Gemäß einer bevorzugten Ausführungsform der Erfindung ist genau ein Streifen der Abdeckung auf der Klebebeschichtung vorhanden.

Die Lage des Streifens auf der Klebebeschichtung ist frei wählbar, wobei eine Anordnung direkt an einer der Längskanten des Trägers bevorzugt wird. Auf diese Weise ergibt sich ein in Längsrichtung des Klebebands erstreckender Klebestreifen, der mit der anderen Längskante des Trägers abschließt.

Wird das Klebeband zur Ummantelung eines Kabelbaums eingesetzt, indem das Klebeband in einer spiralförmigen Bewegung um den Kabelbaum geführt wird, kann die Umhüllung des Kabelbaums so erfolgen, dass die Klebemasse des Klebebands nur auf dem Klebeband selbst verklebt wird, während das Gut mit keinem Kleber in Berührung kommt.

Der so ummantelte Kabelbaum weist aufgrund der fehlenden Fixierung der Kabel durch irgendeinen Kleber eine sehr hohe Flexibilität auf. Damit ist seine Biegefähigkeit beim Einbau - gerade auch in engen Durchgängen oder scharfen Abbiegungen - deutlich erhöht.

Falls eine gewisse Fixierung des Klebebands auf dem Gut gewünscht wird, kann die Ummantelung derartig erfolgen, dass der Klebestreifen zu einem Teil auf dem Klebeband selbst und zu einem anderen Teil auf dem Gut verklebt wird.

Gemäß einer anderen vorteilhaften Ausführungsform ist der Streifen mittig auf der Klebebeschichtung aufgebracht, so dass sich zwei an den Längskanten des Trägers in Längsrichtung des Klebebands erstreckende Klebestreifen ergeben.

Für das sichere und wirtschaftliche Aufbringen des Klebebands in besagter spiralförmiger Bewegung um den Kabelbaum und gegen das Verrutschen der sich ergebenden Schutzumhüllung sind die zwei jeweils an den Längskanten des Klebebands vorhandenen Klebestreifen vorteilhaft, insbesondere wenn einer, der meist schmaler als der zweite Streifen ist, als Fixierungshilfe dient und der zweite, breitere Streifen als Verschluss dient. Auf diese Weise ist das Klebeband so auf dem Kabel verklebt, dass der Kabelsatz gegen Verrutschen gesichert und dennoch flexibel gestaltet ist.

Daneben gibt es Ausführungsformen, bei denen mehr als ein Streifen der Abdeckung auf der Klebebeschichtung aufgebracht sind. Wenn lediglich von einem Streifen die Rede ist, liest der Fachmann in Gedanken mit, dass durchaus auch mehrere Streifen gleichzeitig die Klebebeschichtung eindecken können.

Bevorzugt deckt der Streifen insgesamt zwischen 50 % und 80 % der Klebebeschichtung ab. Der Abdeckungsgrad ist gewählt in Abhängigkeit von der Anwendung und von dem Durchmesser des Kabelsatzes.

Besonders vorzugsweise verbleiben ein oder zwei Klebestreifen, deren Gesamtbreite 20 bis 50 % der Breite des Trägers ausmacht.

Insbesondere wenn die Klebebeschichtung nicht vollflächig erfolgt, sondern beispielsweise streifenförmig, beziehen sich die angegebenen Prozentzahlen auf die Breite der Streifen der Eindeckung in Bezug auf die Breite des Trägers, sprich erfindungsgemäß weisen der oder die Streifen der Eindeckung eine Breite auf, die zwischen 20 und 80 % der Breite des Trägers ausmacht.

Die so hergestellten Klebemassen können dann mit den allgemein bekannten Verfahren auf den Träger gebracht werden. Bei Verarbeitung aus der Schmelze können dies Auftragsverfahren über eine Düse oder einen Kalander sein.

Bei Verfahren aus der Lösung sind Beschichtungen mit Rakeln, Messern oder Düsen bekannt, um nur einige wenige zu nennen.

Möglich ist auch eine Transferierung der Klebemasse von einem anti-adhäsiven Trägertuch oder Releaseliner auf den Trägerverbund.

Das Klebeband kann sowohl in Form einer Rolle, also in Form einer archimedischen Spirale auf sich selbst aufgerollt, als auch klebmasseseitig eingedeckt mit Trennmaterialien wie silikonisiertem Papier oder silikonisierter Folie hergestellt werden. Als Trennmaterial eignet sich bevorzugt ein nicht-fusselndes Material wie eine Kunststofffolie oder ein gut verleimtes, langfaseriges Papier.

Vorzugsweise wird das Klebeband zum Ummanteln von langgestrecktem Gut wie insbesondere Kabelsätzen eingesetzt, wobei das langgestreckte Gut in axialer Richtung von dem Klebeband umhüllt wird oder das Klebeband in einer schraubenförmigen Bewegung um das langgestreckte Gut geführt wird. Es ergibt sich die Form einer Helix (auch Schraube, Schraubenlinie, zylindrische Spirale oder Wendel genannt; Helix ist eine Kurve, die sich mit konstanter Steigung um den Mantel eines Zylinders windet).

Schließlich umfasst der Erfindungsgedanke auch ein langgestrecktes Gut, ummantelt mit einem erfindungsgemäßen Klebeband. Vorzugsweise handelt es sich bei dem langgestreckten Gut um einen Kabelsatz.

Aufgrund der hervorragenden Eignung des Klebebandes kann es in einer Ummantelung Verwendung finden, die aus einer Eindeckung besteht, bei der zumindest in einem Kantenbereich der Eindeckung das selbstklebend ausgerüstete Klebeband vorhanden ist, das so auf der Eindeckung verklebt ist, dass sich das Klebeband über eine der Längskanten der Eindeckung erstreckt, und zwar vorzugsweise in einem im Vergleich zur Breite der Eindeckung schmalen Kantenbereich.

Einderartiges Produkt sowie optimierte Ausführungsformen desselben werden in derEP 1 312 097 A1 offenbart. In der EP 1 300 452 A2, der DE 102 29 527 A1 sowie der WO 2006 108 871 A1 werden Weiterentwicklungen dargestellt, für die das erfindungsgemäße Klebeband ebenfalls sehr gut geeignet ist. Ebenso kann das erfindungsgemäße Klebeband in einem Verfahren Verwendung finden, wie es die EP 1 367 608 A2 offenbart.

Schließlich beschreiben die EP 1 315 781 A1 sowie die DE 103 29 994 A1 Ausführungsformen von Klebebändern, wie sie auch für das erfindungsgemäße Klebeband möglich sind.

Im Folgenden soll das Klebeband anhand mehrerer Figuren näher erläutert werden, ohne damit eine wie auch immer geartete Einschränkung hervorrufen zu wollen.

Es zeigen
- Figur 1: das Klebeband im seitlichen Schnitt,
- Figur 2: das den Träger bildende Gewebe und
- Figur 3: einen Ausschnitt eines Kabelbaums, der sich aus einer Bündelung von einzelnen Kabeln zusammensetzt und der mit dem erfindungsgemäßen Klebeband ummantelt ist.

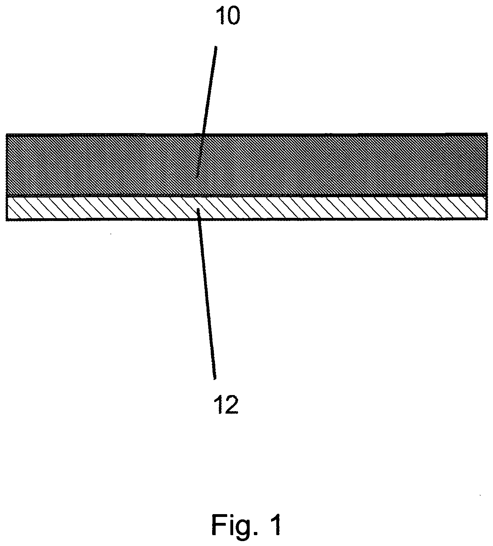

In der Figur 1 ist im seitlichen Schnitt das Klebeband gezeigt, das aus einem Gewebeträger 10 besteht, auf den einseitig eine Schicht einer selbstklebenden Beschichtung 12 aufgebracht ist.

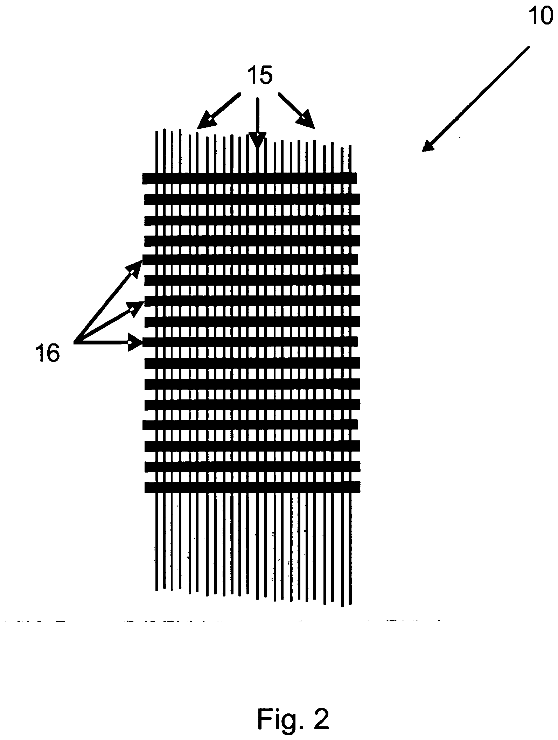

Figur 2 zeigt das den Träger 10 bildende Gewebe im Detail. Das Gewebe zeichnet sich dadurch aus, dass die Schussfäden 16 ein viel größeres Fadengewicht aufweisen als die Kettfäden 15.

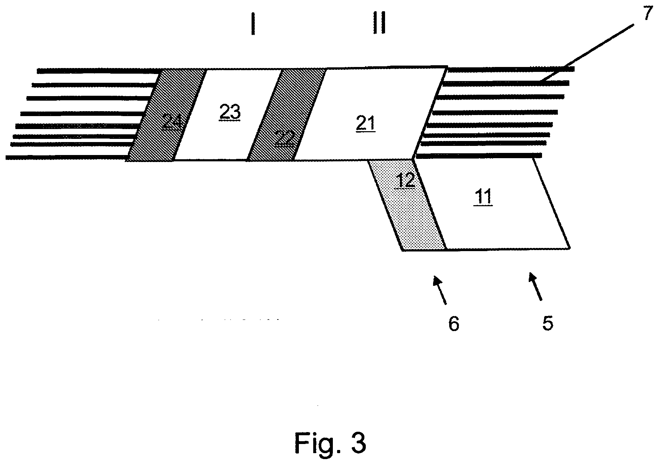

In der Figur 3 ist ein Ausschnitt eines Kabelbaums gezeigt, der sich aus einer Bündelung von einzelnen Kabeln 7 zusammensetzt und der mit dem erfindungsgemäßen Klebeband ummantelt ist. Das Klebeband wird in einer spiralförmigen Bewegung um den Kabelbaum geführt.

Der gezeigte Ausschnitt des Kabelbaums zeigt zwei Wicklungen I und II des Klebebands. Nach links hin würden sich weitere Wicklungen erstrecken, diese sind hier nicht dargestellt.

Auf der Klebebeschichtung ist ein Streifen 5 der Eindeckung vorhanden, so dass sich ein in Längsrichtung des Bands erstreckender Klebestreifen 6 ergibt. Es wechseln sich nichtklebende Bereiche 11, 21, 23 des Klebebands mit klebenden Bereichen 12, 22, 24 ab. (Die Abschnitte 22, 24 sind im Gegensatz zur offen liegenden Klebemasse 12 von außen nicht sichtbar, weshalb die dichtere Schraffur zur Darstellung gewählt ist.)

Die Ummantelung des Kabelbaums erfolgt derartig, dass der Klebemassestreifen 6 vollständig auf dem Klebeband verklebt. Eine Verklebung mit den Kabeln 7 ist ausgeschlossen.

Im Folgenden soll die Erfindung anhand eines Beispiels und dreier Gegenbeispiel näher erläutert werden, ohne mit diesen die Erfindung in irgendeiner Weise beschränken zu wollen.

Die Messungen finden dabei nach folgenden Normen statt:
- Flächengewichte der Gewebe und der Klebmassebeschichtung nach DIN • EN ISO 2286-1
- Garngewicht nach DIN 53830 T3
- Fadenzahl nach DIN EN 1049 Teil 2
- Höchstzugkraft und Höchstzugkraftdehnung der Gewebe und Klebebänder in Längsrichtung nach DIN EN 14410 am Maximum der Reißdehnungskurve (Einspannlänge 100 mm, Zuggeschwindigkeit 300 mm/min)
- Klebkraft nach DIN EN 1939
- Dicke der Gewebe und Klebebänder nach DIN EN 1942
- Abriebfestigkeit nach LV312-1.
- Die Biegesteifigkeit wurde gemessen nach DIN 53362.

Für die Flaggingprüfung wurde die Methode nach LV312 weiterentwickelt. Das Ziel war, Ergebnisse zu erhalten, die näher an der tatsächlichen Anwendung sind (Spannungen im Kabelbündel, geringer Bündeldurchmesser):

Ein Kabelbündel wird erzeugt aus 2 verdrillten Adern mit Leitungsquerschnitt 0,35 mm², Verdrillung mit Schlaglänge ca. 2 cm. Darauf werden dann die Klebebänder von Hand von der Klebebandrolle in einer Spotwicklung (100 % Überlappung) gewickelt, mit der Schere getrennt und von Hand fest angedrückt. Länge der Klebebandstückes 3,0 bis 6,0 cm. Anschließend wird das bewickelte Kabelbündel frei hängend bei Raumtemperatur gelagert. Die Länge der abstehenden Enden wird nach 7 Tagen gemessen.
(I) Gegenbeispiel: tesa 51026
(II) Gegenbeispiel: Beispiel aus DE 20 2007 006 816 U
(III) Gegenbeispiel: Beispiel aus DE 20 2007 008 003 U
(IV) Erfindungsgemäßes Beispiel

**Tabelle 2: Gewebekonstruktionen von Geweben verschiedener PET-Gewebeklebebänder**

| | (I) | (II) | (III) | (IV) |
|---|---|---|---|---|
| | | | | Erfindungsgemäß |
| Trägermaterial | PET-Gewebe | PET-Gewebe | PET-Gewebe | PET-Gewebe |
| Flächengewicht | 130 g/m² | 70 g/m² | 105 g/m² | 118 g/m² |
| Fadenzahl längs (Kette) | 48/cm | 32/cm | 40/cm | 50/cm |
| Fadengewicht längs | 167 dtex | 84 dtex | 167 dtex | 55 dtex |
| Längstiter | 8016 dtex/cm | 2688 dtex/cm | 6680 dtex/cm | 2750 dtex/cm |
| Fadenzahl quer (Schuss) | 23/cm | 30/cm | 20/cm | 27/cm |
| Fadengewicht quer | 167 dtex | 167 dtex | 167 dtex | 334 dtex |
| Trägermaterial | PET-Gewebe | PET-Gewebe | PET-Gewebe | PET-Gewebe |
| Quertiter | 3840 dtex/cm | 5010 dtex/cm | 3340 dtex/cm | 9018 dtex/cm |
| Quotient Quertiter/ Längstiter | 0,48 | 1,9 | 0,50 | 3,3 |
| Biegesteifigkeit in Längsrichtung | 7 bis 8 mN*cm² | 0,5 bis 2 mN*cm² | 4,5 bis 5,5 mN*cm² | 1,0 bis2,5 mN*cm² |
| Höchstzugkraft in Längsrichtung | 260 N/cm | 68 bis 86 N/cm | 230 bis 240 N/cm | 108 N/cm |

**Tabelle 3: Klebebandeigenschaften verschiedener PET-Gewebeklebebänder**

| | (I) | (II) | (III) | (IV) |
|---|---|---|---|---|
| | | | | Erfindungsgemäß |
| Klebstofftyp | Acrylat | Synthesekautschuk | Synthesekautschuk | Acrylat |
| Klebstoffauftrag | 95 g/m² | 60 g/m² | 82,5 g/m² | 50 g/m² |
| Gesamtdicke | 0,26 mm | 0,16 bis 0,18 mm | 0,215 mm | 0,19 mm |
| Klebkraft auf Stahl | 5,0 bis 7,0 N/cm | 10 bis 11 N/cm | 8,0 bis 9,0 N/cm | 3,5 bis 5,5 N/cm |
| Klebkraft auf eigener Rückseite | 5,5 bis 8,5 N/cm | 6 bis 7 N/cm | 5,5 bis 6,5 N/cm | 2,0 bis 5,5 N/cm |
| Abriebfestigkeit 10 mm-Dorn Mittelwert | Klasse D | Klasse C | Klasse D | Klasse D |
| Abriebfestigkeit 5 mm-Dorn Mittelwert | Klasse C | Klasse B | Klasse C | Klasse C |
| Flagging nach 7 Tagen | 2 bis 10 mm | 0 bis 2 mm | 0 bis 10 mm | 0 mm |

Beispiel (IV) zeigt die Vorteile der Erfindung: Hohe Abriebfestigkeit des Klebebandes bei gleichzeitig geringer Biegesteifigkeit in Längsrichtung. Diese beiden Vorteile können kombiniert werden, wenn das Verhältnis von Quertiter zu Längstiter innerhalb der erfindungsgemäßen Grenzen liegt.

Somit kann auch langgestrecktes Gut mit geringem Durchmesser umwickelt werden, ohne dass die Bandenden Flagging zeigen.

## Patentansprüche

1. Klebeband, bestehend aus einem Träger und auf mindestens einer Seite aufgebrachten Klebeschicht, wobei der Träger aus einem Polyestergewebe besteht, **dadurch gekennzeichnet, dass**
der Quotient aus auf die Länge bezogenem Titer der Querfäden, also die Anzahl der Querfäden (Schussfäden) pro Zentimeter multipliziert mit dem Fadengewicht der Querfäden in dtex, und auf die Breite bezogenem Titer der Längsfäden, also die Anzahl der Längsfäden (Kettfäden) pro Zentimeter multipliziert mit dem Fadengewicht der Längsfäden in dtex, zwischen 2,2 und 6 beträgt und der Träger ein Flächengewicht von größer oder gleich 110 g/m² aufweist.

2. Klebeband nach Anspruch 1,
**dadurch gekennzeichnet, dass**
die Dicke des Trägers, gemessen nach DIN EN 1942, maximal 200 µm beträgt, bevorzugt 130 bis 190 µm, besonders bevorzugt 180 bis 190 µm.

3. Klebeband nach Anspruch 1 oder 2,
**dadurch gekennzeichnet, dass**
die Kettfäden ein Garngewicht von höchstens 90 dtex besitzen, vorzugsweise mehr als 30 dtex, besonders bevorzugt 33 bis 65 dtex, ganz besonders bevorzugt 50 bis 60 dtex und/oder
die Schussfäden ein Garngewicht zwischen 220 und 470 dtex, bevorzugt zwischen 300 und 370 dtex.

4. Klebeband nach zumindest einem der Ansprüche 1 bis 3,
**dadurch gekennzeichnet, dass**
die Fadenzahl in der Kette 30 bis 60/cm, vorzugsweise 45 bis 60/cm, besonders vorzugsweise 48 bis 55/cm beträgt.

5. Klebeband nach zumindest einem der vorigen Ansprüche,
**dadurch gekennzeichnet, dass**
die Fadenzahl im Schuss 20 bis 40/cm, vorzugsweise 25 bis 30/cm beträgt.

6. Klebeband nach zumindest einem der vorigen Ansprüche,
**dadurch gekennzeichnet, dass**
der Träger ein Flächengewicht von bis zu 200 g/m², aufweist, bevorzugt 114 bis 140 g/m², besonders bevorzugt 118 g/m².

7. Klebeband nach zumindest einem der vorigen Ansprüche,
**dadurch gekennzeichnet, dass**
das Klebeband eine Höchstzugkraft, gemessen nach DIN EN 14410, von weniger als 115 N/cm besitzt.

8. Klebeband nach zumindest einem der vorigen Ansprüche,
**dadurch gekennzeichnet, dass**
die Abriebfestigkeit des Klebebands, gemessen an einem Dorn mit 10 mm Durchmesser und unter einer Gewichtsbelastung von 7 N nach LV 312, mindestens die Abriebklasse D und/oder
die Abriebfestigkeit des Klebebands, gemessen an einem Dorn mit 5 mm Durchmesser und unter einer Gewichtsbelastung von 7 N nach LV 312, mindestens die Abriebklasse C erfüllt.

9. Klebeband nach zumindest einem der vorigen Ansprüche,
**dadurch gekennzeichnet, dass**
die Biegesteifigkeit des Trägers, gemessen nach DIN 53362 kleiner als 3mN*cm² ist.

10. Klebeband nach zumindest einem der vorigen Ansprüche,
**dadurch gekennzeichnet, dass**
der Klebmasseauftrag, bezogen auf die Klebebandfläche, weniger als 90 g/m² beträgt, vorzugsweise mehr als 30 g/m², besonders vorzugsweise liegt er zwischen 40 und 60 g/m².

11. Klebeband nach zumindest einem der vorigen Ansprüche,
**dadurch gekennzeichnet, dass**
die Klebebeschichtung eine selbstklebende Klebebeschichtung ist, vorzugsweise auf Basis von Kautschuk, Acrylat oder Silikon.

12. Verwendung eines Klebebandes nach zumindest einem der vorherigen Ansprüche zum Ummanteln von langgestrecktem Gut, wobei das Klebeband in einer Schraubenlinie um das langgestreckte Gut geführt wird.

13. Verwendung eines Klebebandes nach zumindest einem der vorherigen Ansprüche zum Ummanteln von langgestrecktem Gut, wobei das langgestreckte Gut in axialer Richtung von dem Band umhüllt wird.

14. Langgestrecktes Gut, wie insbesondere ein Kabelsatz, ummantelt mit einem Klebeband nach zumindest einem der vorherigen Ansprüche.

## Claims

1. Adhesive tape composed of a carrier and of an adhesive layer applied on at least one side, the carrier consisting of a woven polyester fabric,
**characterized in that**
the ratio of the linear density per unit length of the transverse threads, that is to say the number of transverse threads (weft threads) per centimetre, multiplied by the thread weight of the transverse threads in dtex, to the linear density per unit width of the longitudinal threads, that is to say the number of longitudinal threads (warp threads) per centimetre, multiplied by the thread weight of the longitudinal threads in dtex, is between 2.2 and 6 and the carrier has a basis weight of greater than or equal to 110 g/m².

2. Adhesive tape according to Claim 1,
**characterized in that**
the thickness of the carrier, measured to DIN EN 1942, is not more than 200 µm, preferably 130 to 190 µm, more preferably 180 to 190 µm.

3. Adhesive tape according to Claim 1 or 2,
**characterized in that**
the warp threads possess a yarn weight of not more than 90 dtex, preferably more than 30 dtex, more preferably 33 to 65 dtex, very preferably 50 to 60 dtex and/or
the weft threads possess a yarn weight of between 220 and 470 dtex, preferably between 300 and 370 dtex.

4. Adhesive tape according to at least one of Claims 1 to 3,
**characterized in that**
the thread count in the warp is 30 to 60/cm, preferably 45 to 60/cm, more preferably 48 to 55/cm.

5. Adhesive tape according to at least one of the preceding claims,
**characterized in that**
the thread count in the weft is 20 to 40/cm, preferably 25 to 30/cm.

6. Adhesive tape according to at least one of the preceding claims,
**characterized in that**
the carrier has a basis weight of up to 200 g/m², preferably 114 to 140 g/m², more preferably 118 g/m².

7. Adhesive tape according to at least one of the preceding claims,
**characterized in that**
the adhesive tape possesses an ultimate tensile force, measured to DIN EN 14410, of less than 115 N/cm.

8. Adhesive tape according to at least one of the preceding claims,
**characterized in that**
the abrasion resistance of the adhesive tape, measured on a 10 mm diameter mandrel and under a weight loading of 7 N to LV 312, meets at least abrasion class D and/or
the abrasion resistance of the adhesive tape, measured on a 5 mm diameter mandrel and under a weight loading of 7 N to LV 312, meets at least abrasion class C.

9. Adhesive tape according to at least one of the preceding claims,
**characterized in that**
the flexural stiffness of the carrier, measured to DIN 53362, is less than 3 mN*cm².

10. Adhesive tape according to at least one of the preceding claims,
**characterized in that**
the adhesive coatweight, based on the area of the adhesive tape, is less than 90 g/m², preferably more than 30 g/m², being of particular preference between 40 and 60 g/m².

11. Adhesive tape according to at least one of the preceding claims,
**characterized in that**
the adhesive coating is a self-adhesive coating, based preferably on rubber, acrylate or silicone.

12. Use of an adhesive tape according to at least one of the preceding claims for wrapping elongate material, the adhesive tape being led in a helical line around the elongate material.

13. Use of an adhesive tape according to at least one of the preceding claims for wrapping elongate material, the elongate material being sheathed in the axial direction by the tape.

14. Elongate material, such as more particularly a cable loom, wrapped with an adhesive tape according to at least one of the preceding claims.

## Revendications

1. Bande adhésive constituée par un support et au moins une couche adhésive appliquée sur une face, le support consiste d'un tissu en polyester, **caractérisée en ce que** le quotient du titre des fils transversaux par rapport à la longueur, c'est-à-dire le nombre de fils transversaux (fils de trame) par centimètre, multiplié par le poids des fils transversaux en dtex, et du titre des fils longitudinaux par rapport à la largeur, c'est-à-dire le nombre de fils longitudinaux (fils de chaîne) par centimètre, multiplié par le poids des fils longitudinaux en dtex, est compris entre 2,2 et 6 et le support présente un poids surfacique supérieur ou égal à 110 g/m².

2. Bande adhésive selon la revendication 1, **caractérisée en ce que** l'épaisseur du support, mesurée selon la norme DIN EN 1942, est d'au maximum 200 µm, de préférence de 130 à 190 µm, de manière particulièrement préférée de 180 à 190 µm.

3. Bande adhésive selon la revendication 1 ou 2, **caractérisée en ce que** les fils de chaîne présentent un poids de fil d'au plus 90 dtex, de préférence de plus de 30 dtex, de manière particulièrement préférée de 33 à 65 dtex, de manière tout particulièrement préférée de 50 à 60 dtex et/ou
les fils de trame présentent un poids de fil entre 220 et 470 dtex, de préférence entre 300 et 370 dtex.

4. Bande adhésive selon au moins l'une quelconque des revendications 1 à 3, **caractérisée en ce que** le nombre de fils dans la chaîne est de 30 à 60/cm, de préférence de 45 à 60/cm, de manière particulièrement préférée de 48 à 55/cm.

5. Bande adhésive selon au moins l'une quelconque des revendications précédentes, **caractérisée en ce que** le nombre de fils dans la trame est de 20 à 40/cm, de préférence de 25 à 30/cm.

6. Bande adhésive selon au moins l'une quelconque des revendications précédentes, **caractérisée en ce que** le support présente un poids surfacique de jusqu'à 200 g/m², de préférence de 114 à 140 g/m², de manière particulièrement préférée de 118 g/m².

7. Bande adhésive selon au moins l'une quelconque des revendications précédentes, **caractérisée en ce que** la bande adhésive présente une résistance à la traction maximale, mesurée selon la norme DIN EN 14410, de moins de 115 N/cm.

8. Bande adhésive selon au moins l'une quelconque des revendications précédentes, **caractérisée en ce que** la résistance à l'usure de la bande adhésive, mesurée sur un mandrin d'un diamètre de 10 mm et sous un poids de 7 N selon LV 312, répond au moins à la classe d'usure D et/ou
la résistance à l'usure de la bande adhésive, mesurée sur un mandrin d'un diamètre de 5 mm et sous un poids de 7 N selon LV 312, répond au moins à la classe d'usure C.

9. Bande adhésive selon au moins l'une quelconque des revendications précédentes, **caractérisée en ce que** la rigidité à la flexion du support, mesurée selon la norme DIN 53382, est inférieure à 3mN * cm².

10. Bande adhésive selon au moins l'une quelconque des revendications précédentes, **caractérisée en ce que** la masse adhésive appliquée, par rapport à la surface de la bande adhésive, est inférieure à 90 g/m², de préférence supérieure à 30 g/m², de manière particulièrement préférée entre 40 et 60 g/m².

11. Bande adhésive selon au moins l'une quelconque des revendications précédentes, **caractérisée en ce que** le revêtement adhésif est un revêtement autoadhésif, de préférence à base de caoutchouc, d'acrylate ou de silicone.

12. Utilisation d'une bande adhésive selon au moins l'une quelconque des revendications précédentes pour enrober un produit allongé, la bande adhésive étant guidée le long d'une ligne en hélice autour du produit allongé.

13. Utilisation d'une bande adhésive selon au moins l'une quelconque des revendications précédentes pour enrober un produit allongé, le produit allongé étant enrobé dans le sens axial par la bande.

14. Produit allongé, tel qu'en particulier un ensemble de câbles, enrobé par une bande adhésive selon au moins l'une quelconque des revendications précédentes.
